# EUROPÄISCHE PATENTSCHRIFT

(11) **EP 2 761 891 B1**
(45) Veröffentlichungstag und Bekanntmachung des Hinweises auf die Patenterteilung: **18.05.2016**
(21) Anmeldenummer: 12769590.6
(22) Anmeldetag: 14.09.2012
(51) Int. Cl.: H04R 17/00, H04R 7/10, H04R 1/06

(54) **MEMBRANANORDNUNG ZUR SCHALLERZEUGUNG**
DIAPHRAGM ARRANGEMENT FOR GENERATING SOUND
ARRANGEMENT DE MEMBRANE DE GÉNÉRATION DE SON

(30) Priorität: 28.09.2011 DE 102011114471
(43) Veröffentlichungstag der Anmeldung: 06.08.2014
(73) Patentinhaber: Airbus Defence and Space GmbH, 85521 Ottobrunn (DE)
(72) Erfinder: STORM, Stefan, 85716 Unterschleißheim (DE)
(74) Vertreter: Isarpatent
(86) Internationale Anmeldenummer: PCT/DE2012/100280
(87) Internationale Veröffentlichungsnummer: WO 2013/044909

(56) Entgegenhaltungen:
- WO-A2-02/091492
- DE-A1- 10 042 185

## Beschreibung

Die Erfindung betrifft eine Membrananordnung mit Piezokristallen zur Anbringung an einem Strukturbauteil zwecks Schallerzeugung mit zwei Piezokristallen, die beidseitig gegenüber liegend an einer schwingbaren elektrisch leitenden Membran angebracht sind.

Es ist seit langem bekannt, Membrananordnungen mit Piezokristallen zur Schallerzeugung zu verwenden, beispielsweise als Hochtonlautsprecher. Es ist auch bekannt, solche Membrananordnungen in umströmten Bauteilen von Luftfahrzeugen oder Gasturbinen anzuordnen, um zur Schallreduzierung einen dem durch den Betrieb entstehenden Schall phasenmäßig entgegen gesetzten Gegenschall zu erzeugen. Ferner ist es bekannt, solche Membrananordnungen in Vorrichtungen zur Grenzschichtbeeinflussung bei Tragflüglern oder Tragflächen einzusetzen.

Die DE 100 42 185 A1 eine Membrananordnung gemäß dem Oberbegriff von Anspruch 1.

Die WO 02/091492 A2 offenbart die Verwendung einer Zwischenschicht aus leitfähigem Kleber.

Hiervon ausgehend liegt der Erfindung die Aufgabe zugrunde, eine gattungsgemäße Membrananordnung bereitzustellen, die bei eingerissenen Elektrodenflächen eine gesicherte elektrische Verbindung und damit eine lange Lebensdauer ermöglicht.

Erfindungsgemäß wird diese Aufgabe durch die im Anspruch 1 angegebenen Merkmale gelöst. Insbesondere wird die Aufgabe dadurch gelöst, dass die Piezokristalle jeweils elektrisch leitend und Kraft übertragend an der einen Anschlusskontakt aufweisenden Membran befestigt sind und die Piezokristalle jeweils auf ihrer gegenüberliegenden Seite mit einer Kontaktplatte elektrisch leitend verbunden sind, wobei jede Kontaktplatte mindestens einen im wesentlichen zum Strukturbauteil sich erstreckenden Kontaktstreifen aufweist, dessen freies Ende einen elektrischen Anschlusskontakt aufweist, wobei die Membrananordnung durch an den drei Anschlusskontakten anlegbare elektrische Spannungen anregbar ist, wobei ferner zwischen den beiden Piezokristallen und der Membran bzw. den Kontaktplatten jeweils ein elektrisch leitendes Füllmaterial zur elektrischen Verbindung angeordnet ist, das mit Klebstoff durchsetzt ist, um die Piezokristalle elektrisch leitend daran zu fixieren, wobei das Füllmaterial ein Metalldrahtnetz ist.

Das vorzugsweise aus einer Kupferlegierung bestehende Drahtnetz bewirkt vorteilhafterweise eine flächige multipunktuelle elektrische Kontaktierung der Piezokristalle und gewährleistet somit auch bei eingerissenen Elektrodenflächen eine gesicherte elektrische Verbindung und damit eine lange Lebensdauer.

Gemäß einer vorteilhaften Weiterbildung der Erfindung ist die Membrananordnung rund oder oval, was baulich besonders einfach ist und eine gleichmäßige Materialbelastung beim Schwingungsvorgang bewirkt.

Gemäß einer vorteilhaften Weiterbildung der Erfindung ist ein am Strukturbauteil anbringbarer Fixierring vorgesehen, an dem die Membrananordnung befestigt ist. Damit bildet die Membrananordnung eine integrale Einheit, die am Strukturbauteil befestigt werden kann.

Gemäß einer vorteilhaften Weiterbildung der Erfindung sind am Fixierring die Kontaktstreifen angebracht, und die Anschlusskontakte sind elektrisch leitend mit auf dem Fixierring nebeneinander liegenden Außenanschlüssen verbunden. Der Fixierring ist dabei vorzugsweise als Leiterplatine ausgebildet mit Leitungen, die mit den Anschlusskontakten der beiden Kontaktplatten sowie der Membran elektrisch verbunden sind und mit ihren jeweils anderen Enden zu nahe bei einander liegenden Außenanschlüssen führen, damit von einer Stelle aus die elektrische Kontaktierung der Membrananordnung erfolgen kann.

Gemäß einer vorteilhaften Weiterbildung der Erfindung ist zwischen der Membran und den beiden Piezokristallen jeweils ein Metalldrahtnetz zur elektrischen Verbindung angeordnet, das mit Klebstoff durchsetzt ist, um die Piezokristalle an der Membran zu fixieren. Ein solches vorzugsweise aus einer Kupferlegierung bestehendes Drahtnetz bewirkt vorteilhafterweise eine flächige multipunktuelle elektrische Kontaktierung der Piezokristalle und gewährleistet somit auch bei eingerissenen Elektrodenflächen eine gesicherte elektrische Verbindung und damit eine lange Lebensdauer.

Gemäß einer vorteilhaften Weiterbildung der Erfindung sind die Piezokristalle derart mechanisch vorgespannt an der Membran befestigt, dass im Betrieb in diesen keine Zugspannungen auftreten. Damit wird eine Beschädigung der Piezokristalle durch Zugkräfte verhindert.

Gemäß einer vorteilhaften Weiterbildung der Erfindung erstreckt sich der Kontaktstreifen ausgehend von der Kontaktplatte zunächst in Richtung des Kontaktanschlusses und erstreckt sich weiter entfernt in einem geringern Abstand zur Membranebene weiter. Vorzugsweise ist der Kontraktstreifen in faserverstärkten Kunststoff, insbesondere GFK, eingebettet, wodurch eine Reduzierung des elektrischen Feldes in diesem Bereich erreichbar ist und damit ein Schutz vor elektrischem Durchbruch.

Gemäß einer vorteilhaften Weiterbildung der Erfindung ragen die Kontaktplatten über den Rand der Piezokristalle hinaus und unterhalb der Kontaktplatten sind außerhalb der Schmalseiten der Piezokristalle jeweils Dichtringe angeordnet. Damit wird ein wirksamer Schutz der feuchtigkeitsempfindlichen Piezoelemente gegen Feuchtigkeit erzielt. Durch die Oberflächenvergrößerung ergibt sich auch eine bessere Wärmeabgabe aus den Piezokristallen.

Gemäß einer vorteilhaften Weiterbildung der Erfindung ist die Membrananordnung von einem nichtleitenden Faserverbundwerkstoff, vorzugsweise aus GFK, umschlossen. Damit wird ein feuchtigkeitsgeschützter und elektrisch wie mechanisch geschützter Aufbau der Membrananordnung sichergestellt.

Gemäß einer vorteilhaften Weiterbildung dieser Ausbildung erstreckt sich der Faserverbundwerkstoff in der Ebene der Membran über diese hinaus und ist außenseitig an dem Strukturbauteil fixierbar, wobei an der Membran mindestens ein sich zum Strukturbauteil hin erstreckender Kontaktstreifen vorgesehen ist, dessen Ende einen Anschlusskontakt aufweist. Bei großen Schwingungsamplituden der Membran tritt eine Querkontraktion auf, die aufgrund der hohen mechanischen Untersetzung hohe Kräfte in die Einspannung einleiten würde. Durch die Weiterbildung wird eine weiche Aufhängung der Membran bewirkt, welche isolierend wirkt, so dass die erzeugten Schwingungen nur reduziert in das Strukturbauteil übertragen werden.

Gemäß einer vorteilhaften Weiterbildung der Erfindung weist die Membran sich zwei radial gegenüberliegende Kontaktstreifen auf. Damit wird eine symmetrische Aufhängung der Membran und damit eine optimierte Schwingungserzeugung erreicht.

Eine weitere Ausbildung der Erfindung sieht vor, dass ein Gasturbinentriebwerk mit mindestens einer Anzahl Statorblättern vorgesehen ist, wobei zumindest an einem der Teil der Statorblätter die vorher beschriebene Membrananordnung angebracht ist. Damit lässt sich eine wirksame Schallreduzierung erreichen, insbesondere wenn die Membrananordnungen an den Statorschaufeln eines Bypasskanals bzw. einer Fanstufe angebracht sind.

Eine weitere Ausbildung der Erfindung sieht vor, dass ein Tragflügler mit einem Schlitz-Aktuatorsystem zur Grenzschichtbeeinflussung dadurch gekennzeichnet ist, dass dieses eine vorher beschriebene Membrananordnung umfasst. Derartige Systeme wurden kürzlich vorgeschlagen, die beispielsweise an den Leitwerksvorderkanten angeordnet sind, um zur Verlängerung des Bereiches laminarer Strömung eine Grenzschichtbeeinflussung bewirken.

Weitere Merkmale, Anwendungsmöglichkeiten und Vorteile der Erfindung ergeben sich aus der nachfolgenden Figurenbeschreibung anhand von Ausführungsbeispielen. Dabei zeigt:
- Figur 1:: eine Draufsicht auf eine Membrananordnung gemäß eines Ausführungsbeispiels der Erfindung;
- Figur 2:: eine Schnittdarstellung entlang Linie II-II von Figur 1;
- Figur 3:: eine Schnittdarstellung entlang Linie III-III von Figur 1;
- Figur 4:: eine Schnittdarstellung entlang Linie IV-IV von Figur 1;
- Figur 5:: eine schematische Längsschnittdarstellung einer ersten Ausführungsform;
- Figur 6:: eine schematische Längsschnittdarstellung einer zweiten Ausführungsform;
- Figur 7:: ein Diagramm, welches das Schwingungsverhalten über der Anregungsfrequenz darstellt.

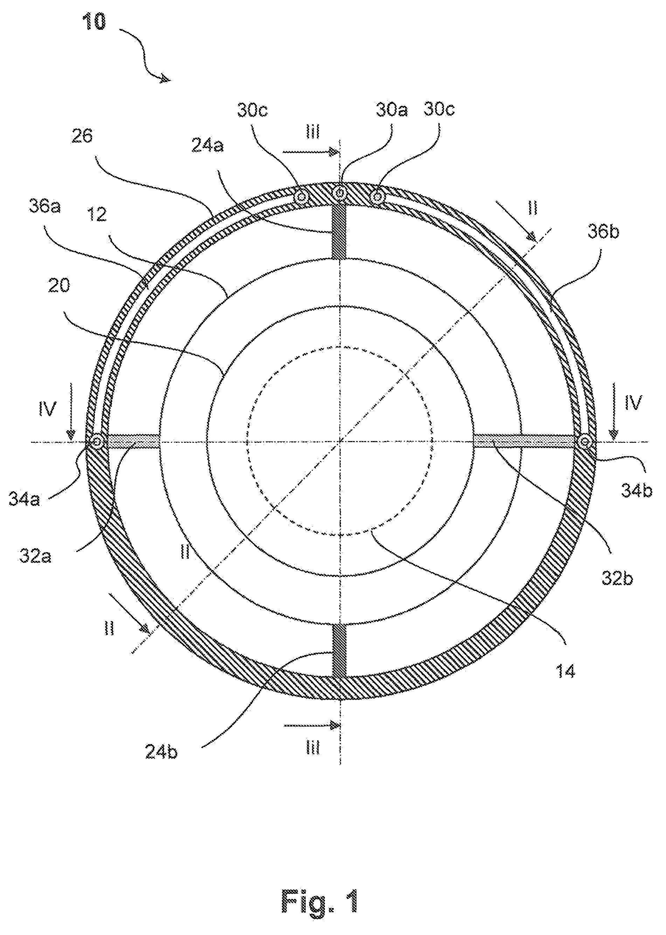

In den Figuren 1 bis 4 ist eine Ausführungsform einer Membrananordnung 10 in Draufsicht sowie drei mit II-II, III-III und IV-IV bezeichneten Schnitten dargestellt. Die Membrananordnung 10 besteht im Wesentlichen aus einer kreisscheibenartigen metallischen Membran 12, an der beidseitig gegenüberliegend zwei Piezokristalle 14a, 14b jeweils über ein mit Klebstoff durchsetztes Kupfernetz 16a, 16b fest angebracht sind. Dabei wird über das Kupfernetz 16a, 16b jeweils eine multipunktuelle elektrische Verbindung zwischen dem Kupfernetz 16a, 16b und dem jeweiligen Piezokristall 14a, 14b bzw. der Membran 12 gebildet. Dabei ist der zwischen den Kupfernetzen 16a, 16b befindliche Raum vollständig mit Kleber, vorzugsweise einem Kunstharz auf Epoxidbasis, ausgefüllt.

Die der Membran 12 jeweils gegenüberliegenden Seiten der beiden Piezokristalle 14a, 14b sind auf gleiche Weise über weitere Kupfernetze 18a, 18b mit elektrisch leitenden, vorzugsweise metallischen Kontaktplatten 20a, 20b verbunden. Die Kontaktplatten 20a, 20b ragen radial über die Piezokristalle 14a, 14b hinaus. Radial außerhalb der Piezokristalle 14a, 14b sind Dichtringe 22a, 22b vorgesehen, die dichtend zwischen der Membran 12 und den Kontaktplatten 20a, 20b angeordnet sind und die feuchtigkeitsempfindlichen Schmalseiten der Piezokristalle 14a, 14b gegenüber Feuchtigkeit schützen. Diese bestehen vorzugsweise aus Messing oder Kupferberyllium.

Wie entlang der Schnittlinie III-III in Figur 1 zu erkennen ist, umfasst die Membran 12 zwei sich gegenüberliegende Kontaktstreifen 24a, 24b auf, die an einem Fixierring 26 befestigt sind. Die Membran 12 ist über einen Kontaktstreifen 24a mittels eines Kontaktstiftes 28 über Silberleitkleber mit einem auf dem Fixierring 26 angebrachten Anschlusskontakt 30a (Figur 1) elektrisch leitend verbunden.

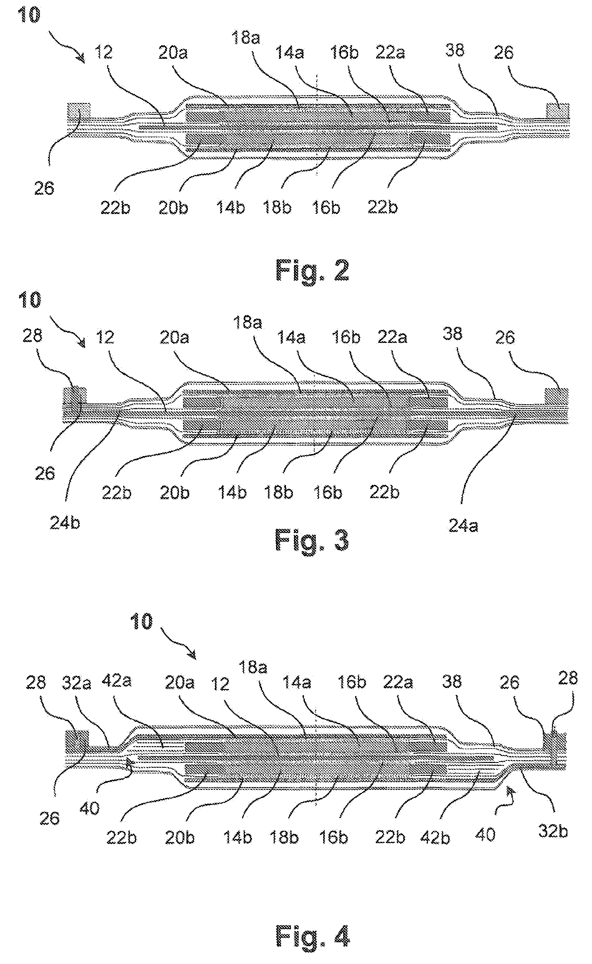

Wie in Figur 4 bzw. der Schnittlinie IV-IV in Figur 1 zu erkennen ist, umfassen die beiden Kontaktplatten 20a, 20b jeweils Kontaktstreifen 32a, 32b, die ebenfalls mittels Kontaktstiften 28 mit Kontakten 34a, 34b verbunden sind. Diese stehen über auf dem Fixierring 26 angebrachten Leiterbahnen 36a, 36b mit Anschlusskontakten 30b, 30c in elektrisch leitender Verbindung. Auf diese Weise liegen die drei nötigen Anschlusskontakte 30a, 30b, 30b zur Einleitung einer Spannung U1 zwischen den Anschlusskontakten 30b, 30a an das Piezokristall 14a und einer Spannung U2 zwischen den Anschlusskontakten 30a, 30c an das Piezokristall 14b dicht beieinander. Zur Anredung der erfindungsgemäßen Membrananordnung 10 wird vorzugsweise an den Anschlusskontakt 30b eine Spannung von 0V gelegt, an den Anschlusskontakt 30c eine Gleichspannung im Bereich von 200- 400 V und an den Anschlusskontakt 30a der Membran 12 eine Wechselspannung, die zwischen 0V und der Spannung am Anschlusskontakt 30c liegt.

Die Membrananordnung 10 umfasst eine Außenschicht 38 aus glasfaserverstärktem Kunststoff. Wie in Figur 4 dargestellt ist, erstrecken sich die beiden mit den Kontaktplatten 20a, 20b verbundenen Kontaktstreifen 32a, 32b zunächst in der Ebene der Kontaktplatten 20a, 20b, um dann weiter radial außen an den mit 40 bezeichneten Biegestellen nach innen abzubiegen und näher an der Membran 12 zu verlaufen, so dass unterhalb der Kontaktstreifen 32a, 32b Aufdickungen 42a, 42b gebildet sind, die eine Reduzierung des elektrischen Feldes und damit einen Schutz vor elektrischen Durchbrüchen bewirken.

In einer bevorzugten Ausführungsform hat der Fixierring 26 einen Außendurchmesser von 100 mm und eine Breite von 5 mm. Die Membran 12 hat einen Durchmesser von 70 mm und eine Dicke von 0,10 mm. Die Piezokristalle 14a, 14b haben einen Durchmesser von 40 mm und eine Dicke von 0,30 mm. Die Dicke der Kupfernetze 16 und 18 liegt bei 0,1 mm. Die Gesamtdicke der Membrananordnung 10 liegt bei ca. 1,7 mm.

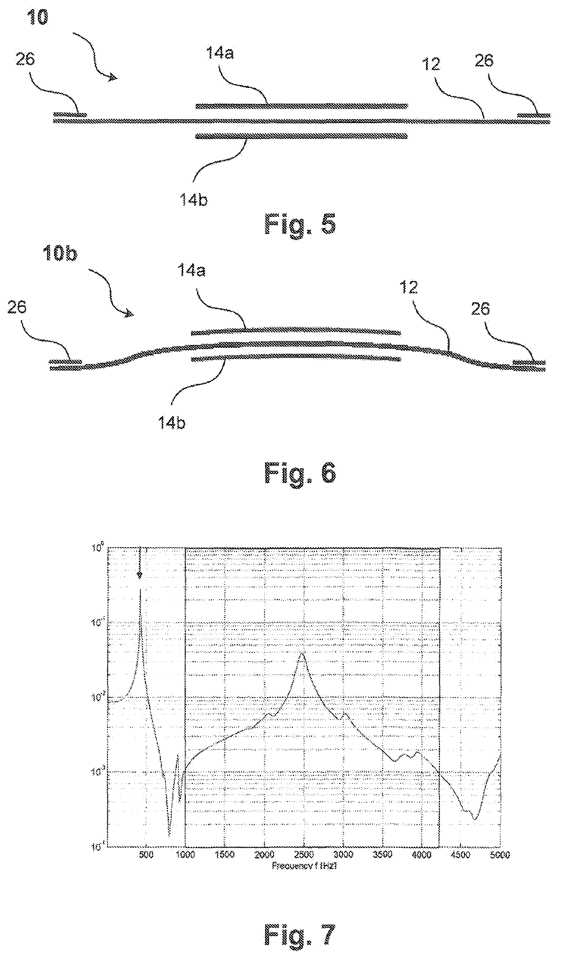

In den Figuren 5 und 6 sind sehr schematisch zwei Ausführungsformen von Membrananordnungen 10 und 10b dargestellt. Die in Figur 5 gezeigte Membrananordnung 10 entspricht der in den Figuren 1 bis 4 dargestellten Ausführung mit einer planen Membran 12 und entsprechend planen Piezokristallen 14a und 14b. Bei der Ausführungsform 10b ist die Membran 12 kalottenartig gekrümmt und entsprechend sind die Piezokristalle 14a und 14b geformt. Die Krümmung ist vorzugsweise derart, dass die Mitte der Membran 12 ca. 0,5 bis 2 mm oberhalb der Ebene einer planen Membran liegt. Diese Ausführungsform eignet sich zur Kompensation statischer Druckbelastungen bis zu ca. 2 bar.

In Figur 6 ist ein Diagramm dargestellt, das die Maximalauslenkung einer Ausführungsform einer Membran 12 in der Dimension [mm] in dessen Zentrum über der Anregungsfrequenz in der Dimension [Hz] darstellt. Dabei ist zu erkennen, dass vorzugsweise der Bereich um den zweiten parallelen Moden im Bereich um 2500 Hz benutzt wird, um die Membrananordnung 10 mit einer geringen Spannung betreiben zu können, um einen gewünschten Schalldruckpegel zu erreichen. Der genutzte Frequenzbereich liegt zwischen ca. 1000 und 4200 Hz. Der niedrige erste parallele Schwingungsmode ermöglicht eine weiche Aufhängung der Membran, dadurch findet eine gute mechanische Entkoppelung auf die Einspannung sowohl in Schallabstrahlungsrichtung als auch in Querrichtung statt. Damit wird das die Membran aufnehmende Bauteil vor den Vibrationen der Membran geschützt, falls dieses im Bereich der Anregung Eigenresonanzen aufweist. Umgekehrt wird die Membran, bzw. die Piezokeramik vor hohen statischen Kräften - hervorgerufen durch Temperaturausdehnung oder niederfrequenten Bewegungen - geschützt.

### Bezugszeichenliste

- 10: Membrananordnung
- 12: Membran
- 14a,b: Piezokristall
- 16a,b: Kupfernetz
- 18a,b: Kupfernetz
- 20a,b: Kontaktplatte
- 22a,b: Dichtring
- 24a,b: Kontaktstreifen
- 26: Fixierring
- 28: Kontaktstift
- 30a,b,c: Anschlusskontakt
- 32a, b: Kontaktstreifen
- 34a,b: Kontakt
- 36a,b: Leiterbahn
- 38: GFK-Schicht
- 40: Biegungen
- 42a, b: Aufdickungen

## Patentansprüche

1. Membrananordnung (10) zur Anbringung an einem Strukturbauteil zwecks Schallerzeugung, mit zwei Piezokristallen (14), die beidseitig gegenüber liegend an einer schwingbaren elektrisch leitenden Membran (12) angebracht sind, wobei die Piezokristalle (14) jeweils elektrisch leitend und Kraft übertragend an der einen Anschlusskontakt (30a) aufweisenden Membran (12) befestigt sind und die Piezokristalle (14) jeweils auf ihrer gegenüberliegenden Seite mit einer Kontaktplatte (20) elektrisch leitend verbunden sind, wobei jede Kontaktplatte (20) mindestens einen im wesentlichen zum Strukturbauteil sich erstreckenden Kontaktstreifen (24, 32) aufweist, dessen freies Ende einen elektrischen Anschlusskontakt (34) aufweist, wobei die Membrananordnung (10) durch an den drei Anschlusskontakten (30, 34) anlegbare elektrische Spannungen anregbar ist, **dadurch gekennzeichnet, dass** zwischen den beiden Piezokristallen (14) und der Membran (12) bzw. den Kontaktplatten (20) jeweils ein elektrisch leitendes Füllmaterial (18) zur elektrischen Verbindung angeordnet ist, das mit Klebstoff durchsetzt ist, um die Piezokristalle (14) elektrisch leitend daran zu fixieren, wobei das Füllmaterial ein Metalldrahtnetz (18) ist.

2. Membrananordnung nach Anspruch 1, **dadurch gekennzeichnet, dass** diese (10) rund oder oval ist.

3. Membrananordnung nach Anspruch 1, **dadurch gekennzeichnet, dass** ein am Strukturbauteil anbringbarer Fixierring (26) vorgesehen ist, an dem die Membrananordnung (10) befestigt ist.

4. Membrananordnung nach Anspruch 3, **dadurch gekennzeichnet, dass** am Fixierring (26) die Kontaktstreifen (24, 32) angebracht sind, und die Anschlusskontakte (34) elektrisch leitend mit auf dem Fixierring (26) nebeneinander liegenden Außenanschlüssen (30) verbunden sind.

5. Membrananordnung nach Anspruch 1, **dadurch gekennzeichnet, dass** das Metalldrahtnetz (18) aus einer Kupferlegierung besteht.

6. Membrananordnung nach Anspruch 1, **dadurch gekennzeichnet, dass** jeder der Kontaktstreifen (24) ausgehend von der jeweiligen Kontaktplatte (20) sich zunächst in Richtung des Kontaktanschlusses (34) erstreckt und sich anschließend in einem geringern Abstand zur Membranebene weiter erstreckt.

7. Membrananordnung nach einem der vorherigen Ansprüche, **dadurch gekennzeichnet, dass** die Kontaktplatten (20) radial über den Rand der Piezokristalle (14) hinausragen.

8. Membrananordnung nach Anspruch 1, **dadurch gekennzeichnet, dass** die Membran (12) sich zwei radial gegenüberliegende Kontaktstreifen (24a, 24b) aufweist.

9. Gasturbinentriebwerk mit einer Anzahl Statorblätter, **dadurch gekennzeichnet, dass** zumindest an einem der Teil der Statorblätter in einem Bypasskanal oder einem Verdichter eine Membrananordnung nach einem der vorherigen Ansprüche angebracht ist.

10. Tragflügler mit einem Schlitz-Aktuatorsystem zur Grenzschichtbeeinflussung, **dadurch gekennzeichnet, dass** dieses eine Membrananordnung nach einem der vorherigen Ansprüche aufweist.

## Claims

1. Membrane arrangement (10) for attachment to a structural component for sound generation, comprising two piezocrystals (14) which are attached opposite one another on the two sides of an oscillatable electrically conductive membrane (12), the piezocrystals (14) each being fastened to the membrane (12), which comprises a connection contact (30a), in an electrically conductive, force-transmitting manner, and the piezocystals (14) each being electrically contacted with a contact plate (20) on the opposite side thereof, each contact plate (20) comprising at least one contact strip (24, 32), which extends substantially to the structural component and the free end of which comprises an electrical connection contact (34), the membrane arrangement (10) being excitable by electrical voltages which can be applied to the three connection contacts (30, 34), **characterised in that** an electrically conductive filler material (18) is arranged between each of the two piezocrystals (14) and the membrane (12) and the contact plates (20) for electrical connection, and is interspersed with glue so as to fix the piezocrystals (14) thereto in an electrically conductive manner, the filling material being a metal wire netting (18).

2. Membrane arrangement according to claim 1, **characterised in that** said arrangement (10) is round or oval.

3. Membrane arrangement according to claim 1, **characterised in that** a fixing ring (26) is provided, which is attachable to the structural component and to which the membrane arrangement (10) is fastened.

4. Membrane arrangement according to claim 3, **characterised in that** the contact strips (24, 32) are attached to the fixing ring (26), and the connection contacts (34) are connected in an electrically conductive manner to outer terminals (30) positioned side by side on the fixing ring (26).

5. Membrane arrangement according to claim 1, **characterised in that** the metal wire netting (18) consists of a copper alloy.

6. Membrane arrangement according to claim 1, **characterised in that**, starting from the associated contact plate (20), each of the contact strips (24) initially extends towards the contact terminal (34) and subsequently extends onwards at a smaller distance from the plane of the membrane.

7. Membrane arrangement according to any of the preceding claims, **characterised in that** the contact plates (20) protrude radially past the edge of the piezocrystals (14).

8. Membrane arrangement according to claim 1, **characterised in that** the membrane (12) comprises two contact strips (24a, 24b) radially opposite one another.

9. Gas turbine engine comprising a number of stator sheets, **characterised in that** a membrane arrangement according to any of the preceding claims is attached at least to some of the stator sheets in a bypass duct or a compressor.

10. Gyrocopter comprising a slit actuator system for influencing a boundary layer, **characterised in that** it comprises a membrane arrangement according to any of the preceding claims.

## Revendications

1. Agencement de membrane (10) destiné à être installé sur un élément de structure dans le but de générer du son, comportant deux cristaux piézoélectriques (14) qui sont installés sur une membrane (12) électroconductrice pouvant vibrer, de chaque côté de manière opposée, dans lequel les cristaux piézoélectriques (14) sont respectivement fixés, de manière électroconductrice et en transmettant de la force, sur la membrane (12) présentant un contact de raccordement (30a) et dans lequel les cristaux piézoélectriques (14) sont reliés de manière électroconductrice à une plaque de contact (20) respectivement sur leur côté opposé, dans lequel chaque plaque de contact (20) présente au moins une bande de contact (24, 32) s'étendant essentiellement vers l'élément de structure, dont l'extrémité libre présente un contact de raccordement électrique (34), dans lequel l'agencement de membrane (10) peut être excité par des tensions électriques applicables sur les trois contacts de raccordement (30, 34), **caractérisé en ce qu'**entre les deux cristaux piézoélectriques (14) et la membrane (12), respectivement les plaques de contact (20), est respectivement disposé un matériau de remplissage électroconducteur (18) pour la liaison électrique, lequel matériau de remplissage est chargé de colle afin d'y fixer les cristaux piézoélectriques (14) de manière électroconductrice, dans lequel le matériau de remplissage est un treillis en fil métallique (18).

2. Agencement de membrane selon la revendication 1, **caractérisé en ce que** celui-ci (10) est rond ou ovale.

3. Agencement de membrane selon la revendication 1, **caractérisé en ce qu'**un anneau de fixation (26) pouvant être installé sur l'élément de structure est ménagé, sur lequel anneau de fixation est fixé l'agencement de membrane (10).

4. Agencement de membrane selon la revendication 3, **caractérisé en ce que** les bandes de contact (24, 32) sont installées sur l'anneau de fixation (26), et **en ce que** les contacts de raccordement (34) sont reliés de manière électroconductrice à des raccordements externes (30) situés les uns à côté des autres sur l'anneau de fixation (26).

5. Agencement de membrane selon la revendication 1, **caractérisé en ce que** le treillis en fil métallique (18) est constitué d'un alliage de cuivre.

6. Agencement de membrane selon la revendication 1, **caractérisé en ce que** chacune des bandes de contact (24), en partant de la plaque de contact respective (20), s'étend d'abord en direction du raccordement de contact (34) et continue ensuite de s'étendre avec faible écart par rapport au plan de la membrane.

7. Agencement de membrane selon l'une quelconque des revendications précédentes, **caractérisé en ce que** les plaques de contact (20) dépassent radialement au-delà du bord des cristaux piézoélectriques (14).

8. Agencement de membrane selon la revendication 1, **caractérisé en ce que** la membrane (12) présente deux bandes de contact (24a, 24b) radialement opposées l'une à l'autre.

9. Moteur à turbine à gaz comprenant un nombre de pales de stator, **caractérisé en ce qu'**un agencement de membrane selon l'une quelconque des revendications précédentes est installé sur au moins une partie des pales de stator dans un canal de dérivation ou dans un compresseur.

10. Autogyre muni d'un système actuateur à fente destiné au contrôle de la couche limite, **caractérisé en ce que** celui-ci présente un agencement de membrane selon l'une quelconque des revendications précédentes.
